# EUROPEAN PATENT SPECIFICATION

(11) **EP 3 978 280 B1**
(45) Date of publication and mention of the grant of the patent: **26.11.2025**
(21) Application number: 21201065.6
(22) Date of filing: 05.10.2021
(51) Int. Cl.: B60G 17/016, B60G 9/00, B60G 11/46, B62D 7/04, B62D 7/14

(54) **VEHICLE COMPRISING AN ADJUSTING SYSTEM OF A REAR AXLE**
FAHRZEUG MIT EINEM EINSTELLSYSTEM EINER HINTERACHSE
VÉHICULE COMPRENANT UN SYSTÈME DE RÉGLAGE D'UN ESSIEU ARRIÈRE

(30) Priority: 05.10.2020 IT 202000023383
(43) Date of publication of application: 06.04.2022
(73) Proprietor: IVECO S.P.A., 10156 Torino (IT)
(72) Inventor: PEREIRA DE LEMOS, José Francivaldo, Sete Lagoas MG (BR)
(74) Representative: Studio Torta S.p.A.

(56) References cited:
- DE-A1- 102005 012 599
- DE-A1- 4 443 786
- FR-A1- 2 721 555
- JP-A- H0 277 364

## Description

### TECHNICAL SECTOR

This invention relates to an adjustment system of a rear axle of a heavy vehicle, in particular of an adjustment system for the inclination of this axle in relation to the longitudinal axis of the vehicle.

### PRIOR ART

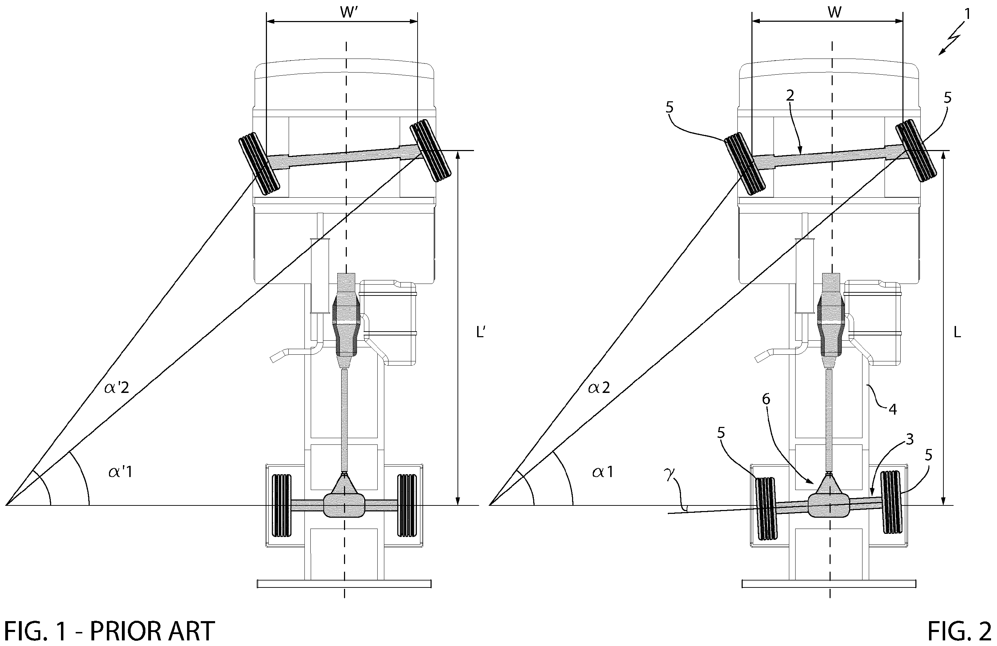

Known heavy vehicles, as illustrated in Figure 1, normally comprise a steering system for steering the front wheels of the vehicle while they comprise front wheels simply carried by the rear axle without being able to steer them. In addition, heavy vehicles usually have rear wheel drive.

Thus, it is clear that in some dynamic curve conditions, it tends to skid, i.e. not to follow the trajectory of the curve, but to leave the lane. This condition can be one of oversteering in which the vehicle tends to increase the bending radius and, thus, leave the road towards the outside of this radius, or a condition of understeering in which the vehicle tends to reduce the bending radius and, thus, leave the road towards the inside of this radius.

This condition is owing to an imbalance of the moments in the wheels in relation to their arms of a distance W' (width) and L' (axlebase) depending on the speed of the vehicle, the torque value in the wheels, and the bending radius α₁', α₂' followed by the vehicle's front wheels.

It is, thus, clear that heavy vehicles, in which the load conditions can often vary and that have, in any case, high load values compared to private transport vehicles are extremely susceptible to the above-mentioned oversteering or understeering phenomena.

There is, thus, a need to improve the dynamic stability of heavy vehicles so as to make them safer and more comfortable to drive.

Examples of known solutions to the above problem are disclosed in JPH0277364 A, DE4443786 A1, which discloses the preamble of claim 1, DE102005012599 A1 or FR2721555 A1.

The purpose of this invention is to meet the needs outlined above in an optimal and economical way.

### SUMMARY OF THE INVENTION

The above-mentioned purpose is achieved with a vehicle comprising an adjustment system for the longitudinal inclination of an axle as in claim 1.

Additional, preferred embodiments of the invention are constructed according to the dependent claims.

### BRIEF DESCRIPTION OF THE DRAWINGS

To better understand this invention a preferred embodiment is described below, by way of non-limiting example and with reference to the attached drawings, in which:
- Figure 1 is a schematic, plan view, with parts removed for clarity, illustrating a vehicle, as known according to the prior art, when driving around a curve;
- Figure 2 is a schematic, plan view with parts removed for clarity, illustrating a vehicle comprising an adjustment system for the longitudinal inclination of an axle according to the invention;
- Figures 3A and 3B are, respectively, a side view and a perspective view, with parts removed for clarity, of an adjustment system for the longitudinal inclination of an axle according to the invention in a first operating condition;
- Figures 4A and 4B are, respectively, a side view and a perspective view, with parts removed for clarity, of an adjustment system for the longitudinal inclination of an axle according to the invention in a second operating condition;
- Figures 5A and 5B are, respectively, a side view and a perspective view, with parts removed for clarity, of an adjustment system for the longitudinal inclination of an axle according to the invention in a third operating condition; and
- Figures 6A, 6B, and 6C are lateral, schematic partial views of the adjustment system in, respectively, Figures 3A-3B, 4A-4B, and 5A-5B.

### DETAILED DESCRIPTION OF THE INVENTION

Figure 2 illustrates a heavy vehicle 1, for example a lorry, comprising, as known, a front axle assembly 2, a rear axle assembly 3, which are carried, using respective suspension systems, by a frame 4, supporting, in addition, a cab of the same, the body, and the remaining functional portions of the same.

Clearly, each axle assembly 2, 3 comprises multiple wheels 5 at respective ends. According to the embodiment described, the front axle assembly 2 is a steering axle while the rear axle assembly 3 is a traction axle and, thus, connected to a vehicle 1 transmission 6 configured to transfer the torque from one power system (not illustrated) to the rear axle assembly 3.

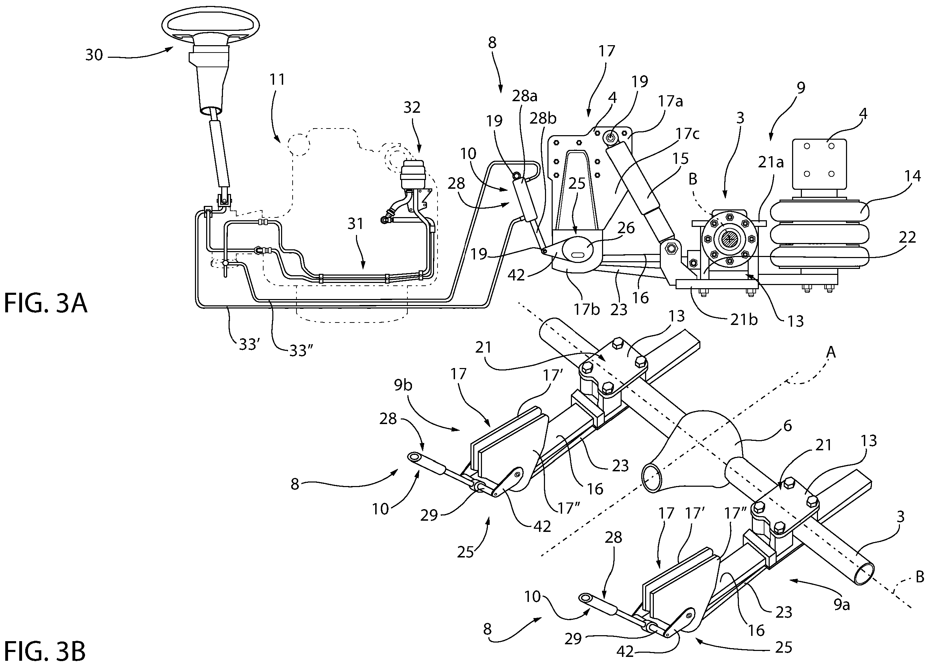

Again, as known, the vehicle 1 extends along a longitudinal axis A and the axle assemblies 2, 3 extend transversally to it along respective axes B at a distance L and have a width W between the wheels 5. When the vehicle 1 is moving straight, the axle assemblies 2 and 3 are basically perpendicular to the longitudinal axis A, i.e. their longitudinal inclination is 90°, as illustrated in Figures 3A/3B.

According to the invention, an adjustment system 8 for the longitudinal inclination of the rear axle assembly 3 is provided, so that the longitudinal inclination varies within a predefined angular interval as a function of the steering angle of the vehicle 1.

Advantageously, this angular interval ranges between 0° and 5°, more preferably between 1 and 3 dynamic degrees.

Advantageously, the adjustment system 8 is configured to move an element of a suspension system 9 of the rear axle assembly 3 so that this rotates around an axis C that is perpendicular to its longitudinal axis B and to the longitudinal axis A of the vehicle 1, changing its inclination in relation to the latter.

Advantageously, the adjustment system 8 comprises actuator means 10 configured to move this element of the suspension system 9.

These actuator means 10 are preferably hydraulic actuators. Advantageously, these actuator means 10 are fluidically connected to a steering system 11 of the vehicle 1, as better described below.

According to the example embodiment illustrated in Figures 3A-5B, the suspension system 9 comprises a right side 9a and a left side 9b connected to each other as described in greater detail below.

Each of the right 9a and left 9b sides basically comprises an axle holder assembly 13, bellows 14, a shock absorber 15, and a leaf spring 16.

The leaf spring 16, which preferably has a rectangular cross section, comprises a first end connected to the frame 4, for example using a front hanger 17, and a second end that is opposite to the first and connected to the bellows 14, and an intermediate portion cooperating in contact with the axle holder assembly 13.

The front hanger 17 is laterally fixed, for example using threaded means to the frame 4 and extends perpendicularly towards the bottom of the latter and comprises an upper portion 17a configured to enable the fixing of the front hanger 17 to the frame 4, a lower portion 17b, opposite to the upper portion 17a, and an intermediate portion 17c joining the upper and lower portions 17a, 17b. The first end of the leaf spring 16 is preferably connected to the lower portion 17b, in a known way.

The front hanger 17 preferably comprises two elements 17', 17", each of which is fixed to the frame of the vehicle opposite each other and spaced apart, even more preferably, having the same shape.

The second end of the leaf spring 16 is fixed, below, to the bellows 14, for example via threaded connections, such as bolts. The bellows 14 are connected above, for example using threaded connections, such as bolts, to the frame 4.

The shock absorber 15, preferably constructed as a hydraulic or pneumatic cylinder, is connected at a first end to the frame, in the example described to the upper portion 17a of the front hanger 17, and at a second end to the axle holder assembly 13, as described below, in a position between the rear axle assembly 3 and the front hanger 17. The connection between the shock absorber 15 and the corresponding ends is advantageously made via hinges 19, configured to enable rotation in relation to the axle holder assembly 13 and/or to the front hanger 17 of the shock absorber 15.

The axle holder assembly 13 is configured to surround the rear axle assembly 3 and to provide anchoring points for the suspension system 9 elements, as described below.

According to the embodiment described, the axle holder assembly 13 comprises multiple plates 21, in the example described, a lower plate 21a and an upper plate 21b vertically placed between the rear axle assembly 3 and the leaf spring 16 and held between them by a compression force provided by the retention means 22. For example, the retention means 22 may comprise threaded elements.

Each of the right 9a and left 9b sides of the suspension system 9 comprises, in addition, a longitudinal connection, advantageously a leaf spring 23, comprising a first end connected to the front hanger 17 and a second end, opposite to the first end, connected to the axle holder assembly 13. The first end and the second end are, advantageously, connected to corresponding elements in a known way.

Advantageously, the connection of the first end is made in the intermediate portion 17c of the front hanger 17, below the connection of the leaf spring 16 with the front hanger 17 and preferably collinear with the latter.

The leaf spring 23 preferably has a rectangular cross section.

According to the embodiment described, the adjustment system 8 comprises an eccentric element 25 that is operationally interposed between the first ends of the leaf spring 16 and of the leaf spring 23 and configured to push these first ends forward or backwards along the longitudinal axis A so as to vary the inclination of the axle 3.

The eccentric element 25 is controlled via the actuator means 10 as described below.

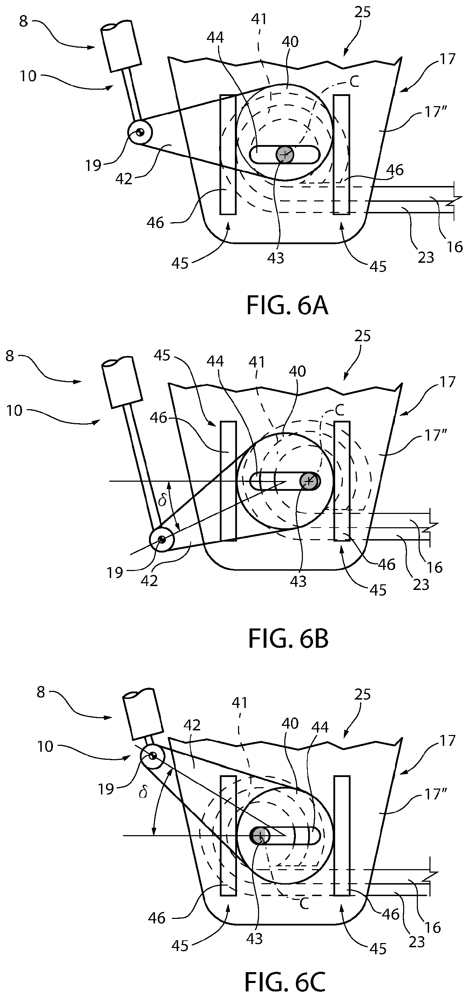

In particular, with reference to Figures 6A-6C, the eccentric element 25 preferably comprises an eccentric ring 40 that is movably carried by the front hanger 17 and a cylinder 41 integral with the rotation of the eccentric ring 40 around a rotation axis C that is perpendicular to the longitudinal axis A.

The eccentric ring 40 is connected by an arm 42, which is configured to enable the rotation thereof around the axis C, to the actuator means 10; in particular, the arm 42 comprises an internal portion that is integral with the eccentric ring 41 of an external portion hinged to the actuator means 10.

The eccentric element 25 is preferably fed through the front hanger 17 and is equipped with a pair of arms 42 placed to the side of a corresponding flange 17 and connected to corresponding eccentric rings 41. These arms 42 are advantageously connected to each other by a bar 29 that is configured to make the second ends of the arms 27 integral with each other.

As a result of what is described above, and of the illustrated embodiment, the cylinder 41 is placed inside the elements 17', 17" of the front hanger 17 while the pair of eccentric rings 40 is placed outside of these.

The eccentric rings 40 are integral with the cylinder 41 by means of a pin 43 housed in a seat 44 formed in the front hanger 17, i.e. in the corresponding element 17', 17".

The front hanger 44 is advantageously straight and preferably horizontal, i.e. perpendicular to the axis C and to the vertical and comprises lateral walls that define, respectively, a rear limit switch (Figure 6C) and a front limit switch (6B) for the pin 43.

Depending on the movement of the arm 42, the pin 43 is, thus, dragged from one rest position (Figure 6A) between the two limit switch positions described above.

The pin 43, as mentioned, makes the eccentric ring 41 integral with the cylinder 40 passing through the element 17' and, in addition, provides a vertical support to the same. As is clear from the figures and mentioned above, the pin 43 is fixed, eccentrically, to the ring 41 while it is fixed in the centre of rotation/symmetry of the cylinder 40.

In addition, each element 17', 17" defines lateral containment means 45 that are configured to hinder a translation in the direction defined by the guide 44 of the one eccentric ring 40, i.e. to enable a translation in just the vertical direction.

In particular, in the embodiment described, the lateral containment means 45 comprise a pair of jutting parts 46 with a basically rectangular shape that protrude externally from each of the elements 17', 17" towards the outside and are configured to cooperate in contact with a lateral edge of the eccentric ring 40. In particular, the pair of jutting parts 46 is turned parallel to a vertical axis and they extend along it to cover the whole movement possible of the eccentric ring 40 in this direction.

In particular, the eccentric ring 40 can move under the action of the arm 42 whose extremity, hinged to the hinge 19, can angularly extend in an interval δ of 20-30° and in both directions in relation to the neutral position of the eccentric ring, thus, with a total angular excursion of 40-60°.

The ends of the leaf spring 16 and of the leaf spring 23 are attached to the cylindrical element 41, for example via a hook connection around the latter. Advantageously, this connection is partly moveable to enable backlash recovery during the movement of the cylindrical element 40; however, it can also be made fixed.

The actuator means 10 advantageously comprise a hydraulic cylinder 28, which is provided with a carcass 28a configured to selectively house a pressurised fluid and fluidically connected to the steering system 11, and a stem 28b, which is configured to extend or retract from the carcass 28a.

The carcass 28a is connected to the frame 4 by means of a movable connection, such as a hinge 19, and the stem 28b is connected by means of a movable connection, such as a hinge 19, to the second end of the arm 42 - in the example illustrated, to the bar 29, which connects the second ends of the pair of arms 42.

The steering system 11 basically comprises a steering wheel 30 and a hydraulic circuit 31 provided with a source of pressurised fluid, for example a pump 32, and configured to control the flow and backflow of this pressurised fluid from the pump 32 to the actuator means 10, depending on the movement of the steering wheel 30.

In particular, the hydraulic circuit 31 comprises at least two tubes 33', 33" fluidically connected to the carcass 28a of the cylinder 28 to control the extension or retraction of the stem 28b. As a result, the cylinder 28 is a double acting cylinder.

The operation of the embodiment of the vehicle provided with an adjustment system described above is the following.

Referring to Figures 3A-3B and 6A, when the vehicle is being driven straight, the rear axle assembly 3 is kept in a "neutral" condition, i.e. not inclined in relation to the longitudinal axis of the vehicle.

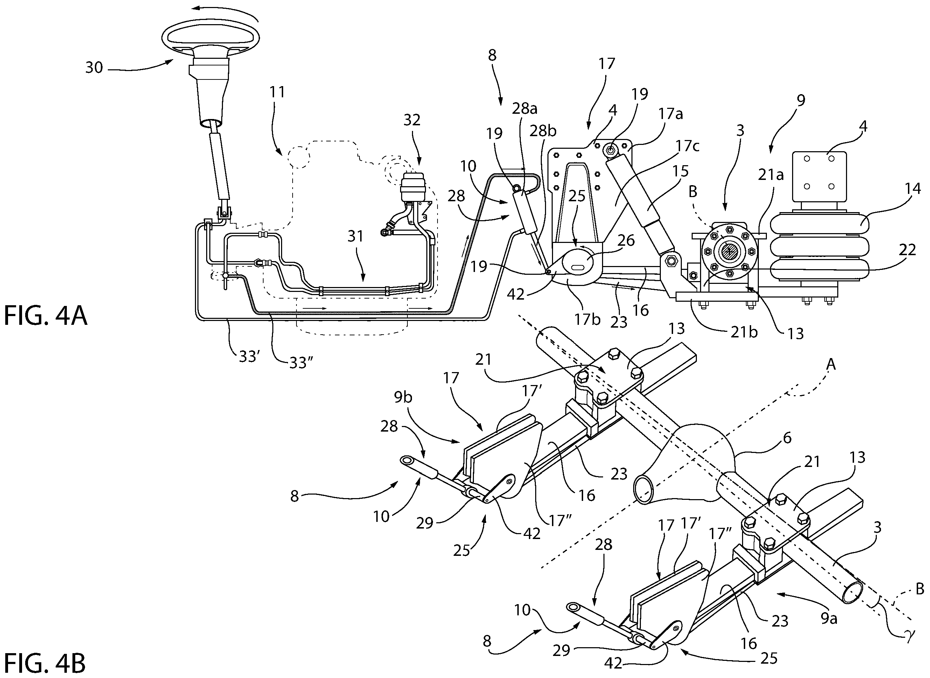

Referring to Figures 4A-4B, and 6B, when steering the vehicle towards the right, the rear axle assembly 3 is moved so as to incline it by an angle γ that is proportional to the steering angle until a maximum, according to the interval included above. In particular, the steering of the vehicle in this direction controls the hydraulic circuit 31 so as to send a hydraulic flow from the pump 31 to the pipe 33" and from this to one of the cylinder chambers 28 that tends to extract the stem 28b in relation to the carcass 28a. As illustrated in Figure 6B, the stem 28b is extracted by moving the end of the arm 42 by an interval δ; in its turn, the arm rotates the eccentric ring 40. The rotation of the eccentric ring 40 moves the excess part of the same against the lateral containment means 45 and, thus, drives the sliding of the pin 43 into the seat 44 until it reaches one of the lateral containment walls, in this example, the front one. In this way, the pin 43, which is integral with the cylinder 41, tends to move it forward in the direction of the longitudinal axis of the vehicle and, so doing, moves the leaf spring 16 and the leaf spring 23 and, thus, the right portion of the axle forwards.

In parallel (not illustrated), the hydraulic circuit 31 enables the backflow of a hydraulic flow from the pipe 33, i.e. from the cylinder 28 placed on the left side of the axle assembly 3 so that the stem 28b is retracted as illustrated in Figure 6C. In this way, the rotation of the eccentric ring 40 moves the excess part of the same against the lateral containment means 45 and, thus, drives the sliding of the pin 43 into the seat 44 until it reaches one of the lateral containment walls, in this example, the rear one. In this way, the pin 43, integral with the cylinder 41, tends to move it forward in the direction of the longitudinal axis of the vehicle and, so doing, moves the leaf spring 16 and the leaf spring 23 and, thus, the left portion of the axle assembly 3 backwards, facilitating the forward movement of the right one as described above. According to what is described above, the axle assembly 3 steers by the angle γ in relation to the longitudinal axis of the vehicle.

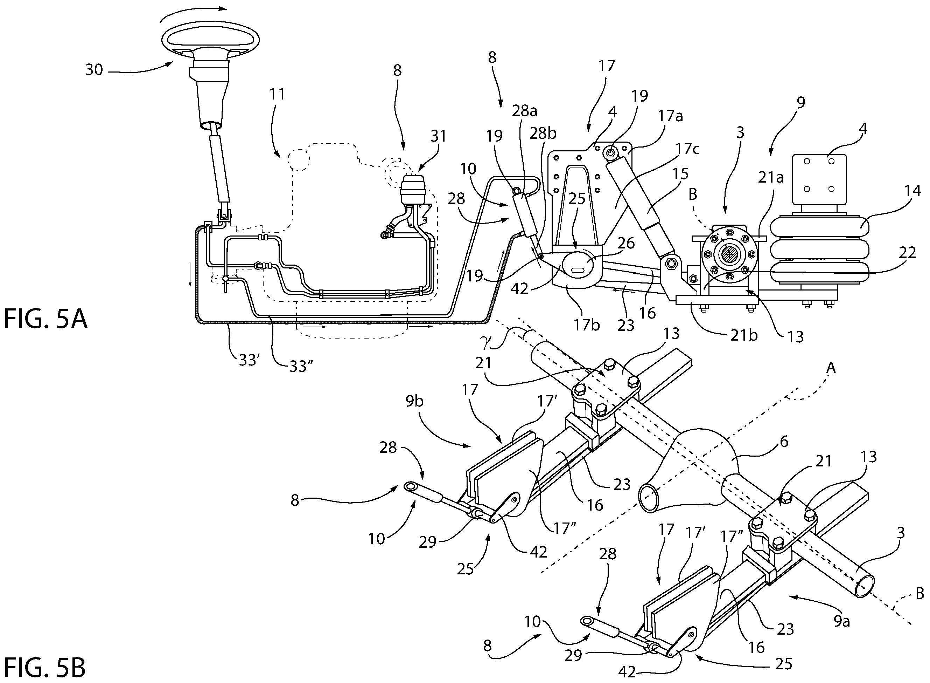

If steered towards the left (Figures 5A-5B and 6C), the operation is the same as that described above, which is not included for the sake of brevity, and the only variation will be in the fact that the flow is sent to the pipe 33' while hydraulic backflow will be enabled from the pipe 33', with the axle moving, as a result, by the angle γ opposite to that described above.

From the above, the advantages of a vehicle provided with an adjustment system according to the invention are clear.

Thanks to the system proposed, it is possible to incline the rear axle of a heavy vehicle, avoiding problems of oversteering and understeering. In fact, the inclination angle γ provided by the adjustment system reduces the axlebase L, reducing the probability of oversteering and understeering.

In particular, the system is an active system and makes it possible to adjust, in a concordant and proportional way, the inclination of the rear axle in relation to the steering of the vehicle's front wheels.

Advantageously, the use of a hydraulic system and of an eccentric element makes it possible to obtain the advantages mentioned above in an extremely compact and safe way.

Finally, it is clear that changes and variations may be made to the vehicle provided with an adjustment system according to this invention that, in any case, do not depart from the scope of protection defined by the claims.

For example, it is clear that the structure illustrated of the rear axle and its connection to the frame may vary.

Again, it is clear that the actuator means 10 could be electromechanical or pneumatic.

Similarly, the eccentric element could be constructed differently.

## Claims

1. A heavy vehicle (1) comprising a frame (4) extending along a longitudinal axis of said vehicle (1) and at least one front axle assembly (2) and a rear axle assembly (3) connected to said frame (4) by means of a respective suspension system (9) and provided with respective wheels (5),
wherein said vehicle includes an adjustment system (8) configured to vary the inclination (γ) of said rear axle group (3) with respect to said longitudinal axis as a function of the steering angle of said front axle group (2),
**characterized in that**
said adjustment system (8) comprises an eccentric element (25) for respectively a left and right side (9b, 9a) of said suspension system (9), said eccentric element (25) being operatively connected to an element of said suspension system (9) and being configured to be rotated around an axis (C) so as to push forward one between said left and right side (9b , 9a) of said suspension system (9) and rearward the other between said left and right side (9b, 9a) of said suspension system (9).

2. The heavy vehicle according to claim 1, wherein said inclination (γ) can vary between 0 ° and 5 °.

3. The vehicle according to Claim 1 or 2, wherein said eccentric element (25) is carried by a front hanger (17) fixed to a frame (4) of said vehicle (1).

4. The vehicle according to Claim 1 to 3, comprising actuator means (10) configured to rotate said eccentric element (25) about said axis (C).

5. The vehicle according to Claim 4, wherein said actuator means (10) comprise a hydraulic cylinder (28).

6. The vehicle according to Claim 4 or 5, in which said actuator means (10) are fluidically connected to a hydraulic circuit (30) forming part of a steering system (11) of said vehicle (1).

7. The vehicle according to Claim 6, in which said hydraulic circuit (30) is configured to control said actuator means (10) so that they impose a rotation (δ) on said eccentric element (25) opposite between said left side and right (9b, 9a) of said suspension system (9).

8. The vehicle according to the preceding claims, wherein said rotation (δ) around said axis (C) is comprised between 20 ° and 80 °.

9. The vehicle according to one of the preceding claims, wherein said suspension system (9) comprises for each of said left and right side (9b, 9a) an axle holder assembly (13) a bellows (14), a shock absorber (15) and a leaf spring (16), said leaf spring (16) comprising a first end connected to said frame (4) and a second end connected to said bellows (14) and an intermediate portion to said first and second portions of end connected to said axle by means of said axle holder assembly (13), said bellows (14) being connected at one end to said leaf spring (16) and at an opposite end to said frame (4), said shock absorber (15) being connected at one end to said axle holder assembly (13) and at an opposite end to said frame (4), said eccentric element (25) being operatively interposed between said frame (4) and said leaf spring (16).

10. The vehicle according to claim 9, comprising a further leaf spring (23) comprising a first end connected to said frame (4) and a second end connected to said axle holder assembly (13).

11. The vehicle according to claim 10, wherein said eccentric element (25) comprises a cylindrical element (41) connected to said leaf spring (16) and to said further leaf spring (23) and an eccentric ring (40) connected to said actuator means (10) to allow rotation around said axis (C), said cylindrical element (41) being connected in an eccentric way with respect to an axis of symmetry of said eccentric ring (41) by means of a pin (43).

12. The vehicle according to Claim 11, comprising a guide (44) integral with said frame (4) configured to allow said pin (43) to slide inside it between respective front and rear limit switches.

13. The vehicle according to Claim 12, comprising lateral containment means (45) with respect to said guide (44) configured to cooperate in contact with said eccentric ring (40) to allow translational movement only in the vertical direction.

14. The vehicle according to one of claims 11 to 13, wherein said eccentric ring (40) is connected to said actuator means (10) by means of an arm (42) comprising an end integral with said eccentric ring (40) and a second end connected by means of a hinge (19) to said actuator means (10).

## Patentansprüche

1. Schwerlastfahrzeug (1), umfassend einen Rahmen (4), der sich entlang einer Längsachse des Fahrzeugs (1) erstreckt, und mindestens eine Vorderachsbaugruppe (2) und eine Hinterachsbaugruppe (3), die mit dem Rahmen (4) mittels eines jeweiligen Aufhängungssystems (9) verbunden und mit jeweiligen Rädern (5) versehen sind,
wobei das Fahrzeug ein Einstellsystem (8) beinhaltet, das konfiguriert ist, um die Neigung (γ) der Hinterachsgruppe (3) in Bezug auf die Längsachse als eine Funktion des Lenkwinkels der Vorderachsgruppe (2) zu variieren,
**dadurch gekennzeichnet, dass** das Einstellsystem (8) ein exzentrisches Element (25) für jeweils eine linke und rechte Seite (9b, 9a) des Aufhängungssystems (9) umfasst, wobei das exzentrische Element (25) operativ mit einem Element des Aufhängungssystems (9) verbunden und konfiguriert ist, um eine Achse (C) gedreht zu werden, um eine von der linken und rechten Seite (9b, 9a) des Aufhängungssystems (9) nach vorn und die andere von der linken und rechten Seite (9b, 9a) des Aufhängungssystems (9) nach hinten zu drücken.

2. Schwerlastfahrzeug nach Anspruch 1, wobei die Neigung (γ) zwischen 0° und 5° variieren kann.

3. Fahrzeug nach Anspruch 1 oder 2, wobei das exzentrische Element (25) von einem vorderen Aufhänger (17) getragen wird, der an einem Rahmen (4) des Fahrzeugs (1) befestigt ist.

4. Fahrzeug nach Anspruch 1 bis 3, umfassend Betätigungsmittel (10), die konfiguriert sind, um das exzentrische Element (25) um die Achse (C) zu drehen.

5. Fahrzeug nach Anspruch 4, wobei die Betätigungsmittel (10) einen Hydraulikzylinder (28) umfassen.

6. Fahrzeug nach Anspruch 4 oder 5, wobei die Betätigungsmittel (10) fluidisch mit einem Hydraulikkreis (30) verbunden sind, der einen Teil eines Lenksystems (11) des Fahrzeugs (1) bildet.

7. Fahrzeug nach Anspruch 6, wobei der Hydraulikkreis (30) konfiguriert ist, um die Betätigungsmittel (10) so zu steuern, dass sie eine Drehung (δ) auf das exzentrische Element (25) entgegengesetzt zwischen der linken und rechten Seite (9b, 9a) des Aufhängungssystems (9) ausüben.

8. Fahrzeug nach den vorhergehenden Ansprüchen, wobei die Drehung (δ) um die Achse (C) zwischen 20° und 80° liegt.

9. Fahrzeug nach einem der vorhergehenden Ansprüche, wobei das Aufhängungssystem (9) für jede von der linken und rechten Seite (9b, 9a) eine Achshalterbaugruppe (13), einen Balg (14), einen Stoßdämpfer (15) und eine Blattfeder (16) umfasst, wobei die Blattfeder (16) ein erstes Ende, das mit dem Rahmen (4) verbunden ist, und ein zweites Ende, das mit dem Balg (14) verbunden ist, und einen Zwischenabschnitt zwischen den ersten und zweiten Endabschnitten, der mit der Achse mittels der Achshalterbaugruppe (13) verbunden ist, umfasst, wobei der Balg (14) an einem Ende mit der Blattfeder (16) und an einem entgegengesetzten Ende mit dem Rahmen (4) verbunden ist, wobei der Stoßdämpfer (15) an einem Ende mit der Achshalterbaugruppe (13) und an einem entgegengesetzten Ende mit dem Rahmen (4) verbunden ist, wobei das exzentrische Element (25) operativ zwischen dem Rahmen (4) und der Blattfeder (16) angeordnet ist.

10. Fahrzeug nach Anspruch 9, umfassend eine weitere Blattfeder (23), die ein erstes Ende, das mit dem Rahmen (4) verbunden ist, und ein zweites Ende, das mit der Achshalterbaugruppe (13) verbunden ist, umfasst.

11. Fahrzeug nach Anspruch 10, wobei das exzentrische Element (25) ein zylindrisches Element (41), das mit der Blattfeder (16) und mit der weiteren Blattfeder (23) verbunden ist, und einen exzentrischen Ring (40), der mit den Betätigungsmitteln (10) verbunden ist, um eine Drehung um die Achse (C) zu ermöglichen, umfasst, wobei das zylindrische Element (41) in einer exzentrischen Weise in Bezug auf eine Symmetrieachse des exzentrischen Rings (41) mittels eines Stifts (43) verbunden ist.

12. Fahrzeug nach Anspruch 11, umfassend eine Führung (44), die integral mit dem Rahmen (4) ausgebildet ist und konfiguriert ist, um es dem Stift (43) zu ermöglichen, darin zwischen jeweiligen vorderen und hinteren Endschaltern zu gleiten.

13. Fahrzeug nach Anspruch 12, umfassend seitliche Einschlussmittel (45) in Bezug auf die Führung (44), die konfiguriert sind, um in Kontakt mit dem exzentrischen Ring (40) zusammenzuwirken, um eine Translationsbewegung ausschließlich in der vertikalen Richtung zu ermöglichen.

14. Fahrzeug nach einem der Ansprüche 11 bis 13, wobei der exzentrische Ring (40) mit den Betätigungsmitteln (10) durch einen Arm (42) verbunden ist, der ein Ende, das integral mit dem exzentrischen Ring (40) ausgebildet ist, und ein zweites Ende, das mittels eines Scharniers (19) mit den Betätigungsmitteln (10) verbunden ist, umfasst.

## Revendications

1. Véhicule lourd (1) comprenant un châssis (4) s'étendant le long d'un axe longitudinal dudit véhicule (1) et au moins un ensemble essieu avant (2) et un ensemble essieu arrière (3) reliés audit châssis (4) au moyen d'un système de suspension (9) respectif et dotés de roues (5) respectives,
dans lequel ledit véhicule comporte un système de réglage (8) configuré pour faire varier l'inclinaison (y) dudit groupe d'essieu arrière (3) par rapport audit axe longitudinal en fonction de l'angle de braquage dudit groupe d'essieu avant (2),
**caractérisé en ce que**
ledit système de réglage (8) comprend un élément excentrique (25) pour respectivement un côté gauche et un côté droit (9b, 9a) dudit système de suspension (9), ledit élément excentrique (25) étant relié fonctionnellement à un élément dudit système de suspension (9) et étant configuré pour être tourné autour d'un axe (C) de façon à pousser vers l'avant un côté parmi ledit côté gauche et ledit côté droit (9b, 9a) dudit système de suspension (9) et vers l'arrière l'autre côté parmi ledit côté gauche et ledit côté droit (9b, 9a) dudit système de suspension (9).

2. Véhicule lourd selon la revendication 1, dans lequel ladite inclinaison (y) peut varier entre 0° et 5°.

3. Véhicule selon la revendication 1 ou 2, dans lequel ledit élément excentrique (25) est porté par une suspension avant (17) fixée à un châssis (4) dudit véhicule (1).

4. Véhicule selon les revendications 1 à 3, comprenant des moyens actionneurs (10) configurés pour faire tourner ledit élément excentrique (25) autour dudit axe (C).

5. Véhicule selon la revendication 4, dans lequel lesdits moyens actionneurs (10) comprennent un vérin hydraulique (28).

6. Véhicule selon la revendication 4 ou 5, dans lequel lesdits moyens actionneurs (10) sont en communication fluidique avec un circuit hydraulique (30) faisant partie d'un système de direction (11) dudit véhicule (1).

7. Véhicule selon la revendication 6, dans lequel ledit circuit hydraulique (30) est configuré pour commander lesdits moyens actionneurs (10) de sorte qu'ils imposent une rotation (δ) audit élément excentrique (25) opposé entre ledit côté gauche et ledit côté droit (9b, 9a) dudit système de suspension (9).

8. Véhicule selon les revendications précédentes, dans lequel ladite rotation (δ) autour dudit axe (C) est comprise entre 20° et 80°.

9. Véhicule selon l'une des revendications précédentes, dans lequel ledit système de suspension (9) comprend pour chacun dudit côté gauche et dudit côté droit (9b, 9a) un ensemble porte-essieu (13) un soufflet (14), un amortisseur (15) et un ressort à lames (16), ledit ressort à lames (16) comprenant une première extrémité reliée audit châssis (4) et une deuxième extrémité reliée audit soufflet (14) et une partie intermédiaire desdites première et deuxième parties d'extrémité reliée audit essieu au moyen dudit ensemble porte-essieu (13), ledit soufflet (14) étant relié à une extrémité audit ressort à lames (16) et à une extrémité opposée audit châssis (4), ledit amortisseur (15) étant relié à une extrémité audit ensemble porte-essieu (13) et à une extrémité opposée audit châssis (4), ledit élément excentrique (25) étant interposé fonctionnellement entre ledit châssis (4) et ledit ressort à lames (16).

10. Véhicule selon la revendication 9, comprenant un ressort à lames supplémentaire (23) comprenant une première extrémité reliée audit châssis (4) et une deuxième extrémité reliée audit ensemble porte-essieu (13).

11. Véhicule selon la revendication 10, dans lequel ledit élément excentrique (25) comprend un élément cylindrique (41) relié audit ressort à lames (16) et audit ressort à lames supplémentaire (23) et une bague excentrique (40) reliée auxdits moyens actionneurs (10) pour permettre une rotation autour dudit axe (C), ledit élément cylindrique (41) étant relié de manière excentrique par rapport à un axe de symétrie de ladite bague excentrique (41) au moyen d'une goupille (43).

12. Véhicule selon la revendication 11, comprenant un guide (44) solidaire dudit châssis (4) configuré pour permettre à ladite goupille (43) de coulisser à l'intérieur de celui-ci entre des interrupteurs de fin de course avant et arrière respectifs.

13. Véhicule selon la revendication 12, comprenant des moyens de confinement latéraux (45) par rapport audit guide (44) configurés pour coopérer au contact de ladite bague excentrique (40) afin de permettre un mouvement de translation uniquement dans la direction verticale.

14. Véhicule selon l'une des revendications 11 à 13, dans lequel ladite bague excentrique (40) est reliée auxdits moyens actionneurs (10) au moyen d'un bras (42) comprenant une extrémité solidaire de ladite bague excentrique (40) et une deuxième extrémité reliée au moyen d'une charnière (19) auxdits moyens actionneurs (10).
